# EUROPEAN PATENT APPLICATION

(11) **EP 1 252 923 A1**
(43) Date of publication of application: **30.10.2002**
(21) Application number: 01900682.4
(22) Date of filing: 12.01.2001
(51) Int. Cl.: B01J 7/00, B60R 22/46, C06D 5/00

(54) **GAS GENERATOR**

(30) Priority: 12.01.2000 JP 2000003115; 27.10.2000 JP 2000032752
(71) Applicant: Nippon Kayaku Kabushiki Kaisha, Tokyo 102-8172 (JP)
(72) Inventor: KUBO, Dairi, Nippon Kayaku Kabushiki-Kaisha, Himeji-shi, Hyogo 679-2123 (JP); AMANO, Junya, Nippon Kayaku Kabushiki-Kaisha, Himeji-shi, Hyogo 679-2123 (JP); MARUYAMA, Junya, Nippon Kayaku Kabushiki-Kaisha, Himeji-shi, Hyogo 679-2123 (JP); MAEDA, Shigeru, Nippon Kayaku Kabushiki-Kaisha, Himeji-shi, Hyogo 679-2123 (JP); IKEDA, Kenjiro, Nippon Kayaku Kabushiki-Kaisha, Himeji-shi, Hyogo 679-2123 (JP)
(74) Representative: Briat, Sophie
(86) International application number: JP0100106
(87) International publication number: WO01051192

(57) **Abstract**

A gas generator includes a first cup 10 packed with gas generating agent 14 that generates gas by burning; a second cup E disposed in an inside of the first cup 10 and containing ignition agent; and a holder 9 holding the first cup 10 thereon and also holding a plug B of the second cup E or the second cup thereon. In the gas generator, there is provided a separator 15 which allows the gas generating agent 14 to be confined within the first cup 10 so as to shield the gas generating agent from the second cup E. Further, the separator 15 is so disposed as to cover the second cup E. In addition, seal materials, such as an O-ring 16, is arranged in a moisture inflow path through which moisture or equivalent comes in from outside of the gas generator 18.

## Description

### Technical Field

The present invention relates to a compact gas generator mainly used for operating a seatbelt pretensioner of an automobile.

### Background Art

A seatbelt pretensioner is known as an occupant restraint system for protecting occupants in an automobile from an automobile collision shock. The pretensioner operates to actuate a cylinder by a large quantity of high temperature and high pressure gas generated from a gas generator. Since the gas generator operates to actuate the cylinder, not an airbag, the gas generator requires a relatively small quantity of generated gas and is so structured as to erupt the high temperature and high pressure gas directly into the cylinder without any mediation such as a filter or a coolant. In general, the gas generator comprises an igniter that contains ignition agents to be ignited when electric power is applied, a first cup that contains gas generating agents, and a holder for fixing the squib and the first cup and is relative simple in structure.

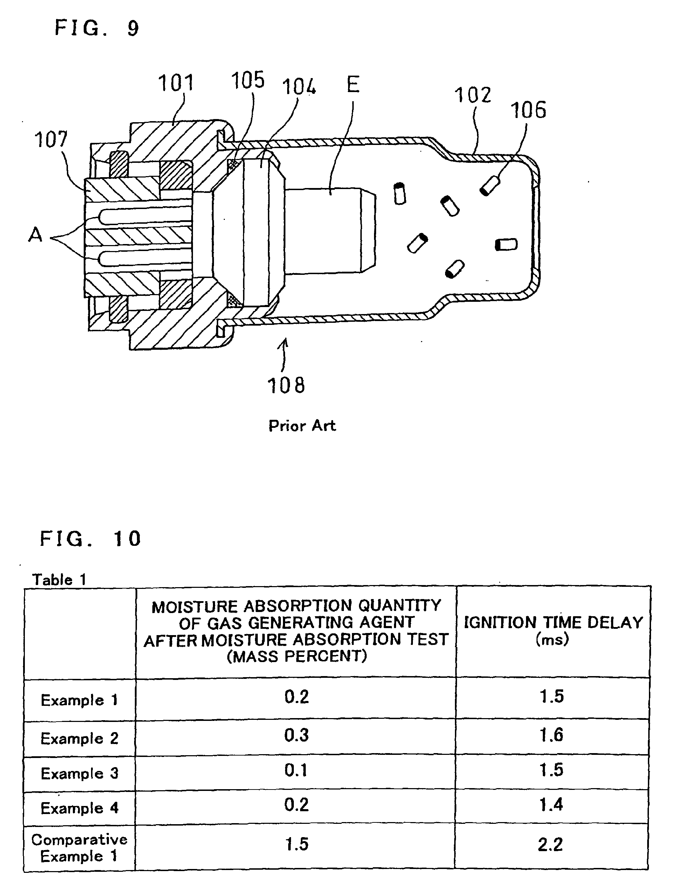

One example of a conventional gas generator for seatbelt pretentioner is shown in FIG. 9. The gas generator 108 of FIG. 9 comprises gas generating agents 106 that generate a large quantity of gas by ignition, an igniter 104 that contains ignition agents to be ignited by the application of electric power, a first cup 102 for containing the gas generating agents, a holder 101 for fixing the igniter 104 and the first cup 102 in the center thereof to seal the gas generating agents 106 and the igniter 104 in the inside of the first cup 102, an O-ring 105, disposed in a gap between the igniter 104 and the holder 101, for preventing moisture from coming in through the gap therebetween, and a shorting clip 107 for keeping two pins A vertically projecting from the igniter 104 in their shorted state. Sealing material, not shown, is applied to the gap between the first cup 102 and the holder 101 to prevent moisture from coming in through the gap.

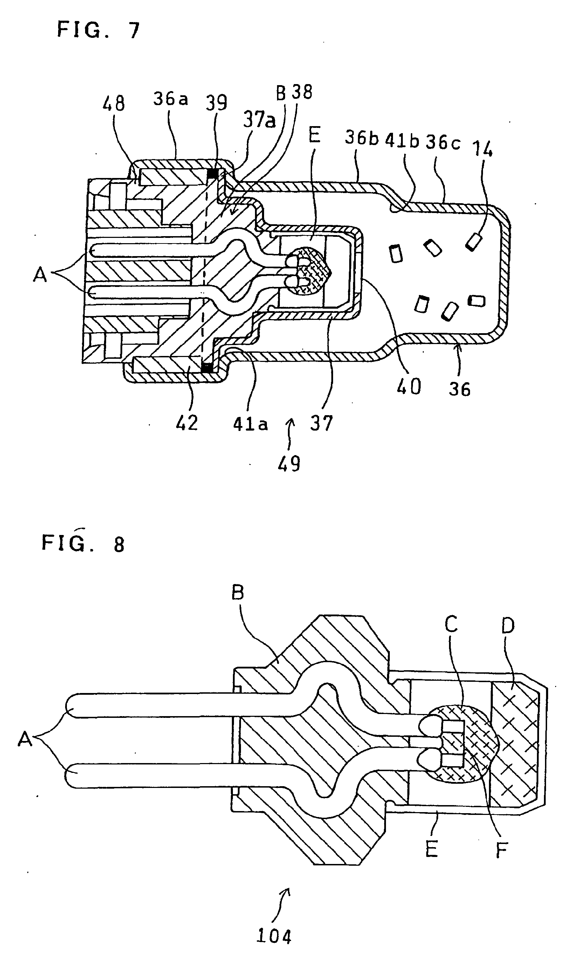

The igniter 104 comprises, in general, a second cup E that contains ignition agent D, a plug B inserted in the second cup E to be fitted therein to seal off the ignition agent D, and the two pins A comprising metal rods extending through the plug B, as shown in FIG. 8. The pins A project into the second cup E and are electrically connected with each other at front ends thereof by a bridge wire F bridging therebetween. The bridge wire F is covered with an ignitable agent C contacting with the ignition agent D.

In general, there is the possibility that the gas generating agents contained in the gas generator may change in combustion pattern from the initially designed one due to moisture absorption. In view of this, the conventional seatbelt pretensioner has mainly used smokeless powder as the gas generating agents 106. The smokeless powder is not high in moisture-absorption characteristics and the gas generator has not been required to have high moisture-absorption characteristics so far.

However, it is being required that a variety of gas generating agents are used for designing the combustion pattern variously. Under the circumstances, when the gas generating agents having high moisture-absorption characteristic are used, the gas generator having high moisture-proof characteristics is required.

In the conventional gas generator, there is the possibility that moisture, damp and the like may come into the gas generator from outside of the gas generator through two inflow paths, i.e., a gap between the first cup 102 and the holder 101 and a gap between the igniter 102 and the holder 101. To keep moisture proof, both of the two inflow paths must be designed and manufactured precisely. As a practical matter, the conventional gas generator uses sealant, such as the O-ring 105, for the two inflow paths, to prevent the gas generating agents 106 from absorbing moisture.

In the conventional gas generator, the igniter is held in the exposed state in the first cup. From viewpoints of costs and assembling workability of the igniter, the second cup of the igniter is sometimes formed of resin of low material strength and the like material.

In general, explosives, such as ignition agents, have the property of burning at an increased burning velocity under high pressure. In the case where the second cup of the igniter is formed of resin of low material strength and the like material, even when the ignition agent of the igniter is ignited, the second cup is broken before the pressure rises up to high pressure at the burning of the ignition agent and, as a result, the burning velocity is decreased. The time required for the igniter to be ignited is usually of the order of 2 milliseconds (ms). Depending on the circumstances, it sometimes takes more time than that to ignite the igniter.

In general, the gas generator is required to be worked within 2 milliseconds (ms). If the operation of the gas generator delays any more, there is the possibility that the gas generator cannot fully exhibit its performance.

It is the object of the present invention to suppress moisture absorption of the gas generating agents in the gas generator and also shorten the time required for the igniter to be ignited, thereby providing a gas generator that is less subject to atmospheric moisture, operates without time delay, and exhibits its performance fully for a seatbelt pretensioner and the like system.

### Disclosure of the Invention

The present invention relates to a gas generator comprising a first cup packed with gas generating agent that generates gas by burning; a second cup disposed in an inside of the first cup and containing ignition agent; and a holder holding the first cup and also holding thereon a plug holding the second cup thereon or the second cup,

The present invention is characterized in that there is provided a separator which allows the gas generating agent to be confined within the first cup so as to shield the gas generating agent from the second cup.

The purpose of shielding the gas generating agent from the second cup by the separator is to prevent moisture such as damp from coming into the first cup from outside of the gas generator through the plug of the second cup and others.

Accordingly, as long as the shield is effected to the extent that the moisture proof is substantially kept, tight seal is not necessarily required. Conversely, even when the tight seal is provided by the separator, if the separator itself has moisture permeability, there is the possibility that the moisture proof may not be kept. Accordingly, the separator is preferably made of material of low moisture permeability. Although the separator is not necessarily formed by a single member but may be formed by combination of several parts, it is preferable that the separator is formed by a single member from the viewpoint of reduction of parts count. It is also preferable that the separator has no through hole piercing in and out.

Thus, the gas generator of the present invention enables moisture flowing toward the gas generating agent to be reduced significantly by using the separator. As a result of this, even when the gas generating agent comprising nitrogen-containing organic compound, mentioned later, is used, the gas generating agent absorbs less moisture and, as a result of this, slower burning velocity of the gas generating agent , in other words, degrading the performance of the gas generator is prevented.

In the gas generator of the present invention, it is preferable that the separator is disposed so as to cover the second cup.

When the ignition agent in the second cup of the igniter is ignited, the separator prevents the second cup of the igniter from being broken before the internal pressure rises up to high pressure at the time of burning of the ignition agent. Accordingly, the ignition agent is burnt under high pressure. As a result of this, the burning velocity is increased, as compared with conventional, so that the ignition time delay of the gas generator 18 is reduced.

In the sense of preventing the second cup of the igniter from being broken before the pressure rises up to high pressure at the time of burning of the ignition agent, it is preferable that the material used for the separator has the property of high strength, in addition to the property of low moisture permeability, as mentioned above. The materials of the separator that may be used include metals, such as iron, aluminum and stainless steel, and resins, such as PBT and fluorocarbon resin. Also, as long as the second cup of the igniter is prevented from being broken before the pressure rises up to high pressure at the time of burning of the ignition agent, the separator need not cover the entire area of the second cup, but preferably it covers the second cup almost entirely. Also, the gap between the separator and the second cup is preferably 1mm or less, or further preferably, 0.2mm or less.

As mentioned above, the separator can provide the two combined results of preventing the inflow of moisture and reducing the ignition time delay. Hence, desired performance can be obtained with a reduced component count, as compared with the case where the required parts are added one for each intended purpose.

Further, in the gas generator of the present invention, it is preferable that the separator is disposed so that at least a part of an outside surface of the separator can be contacted with an inside surface around the first cup. As a result of this structure, the inflow path from an outside of the gas generator into the interior of the first cup is limited to a single path that pass through the gap between a contact surface of the separator and a contact surface of the first cup.

In the gas generator of the present invention, it is preferable that the first cup is provided with a protrusion or a step in an inside surface thereof and the separator is held in its position by the protrusion or the step provided in the inside surface of the first cup.

In the gas generator of the present invention, it is preferable that the separator is held onto the holder by crimping.

As a result of the separator being held on the holder by crimping or held in its position by the protrusion or the step provided in the inside surface of the first cup, the separator can be easily set in position within the first cup in the manufacturing process. Also, as a result of the separator being held on the holder by crimping or held in position by the protrusion or step of the first cup, when the gas generator is operated, the separator is prevented from flying out of the gas generator in all directions. In addition, when the ignition agent in the igniter is ignited, the separator can be prevented from being out of position.

Further, it is preferable that seal materials for sealing a gap between the separator and the holder is disposed therebetween. In addition, in the gas generator of the present invention, it is preferable that seal materials for sealing a gap between the separator and the first cup is disposed therebetween.

To be more specific, an annular groove for fitting the seal materials therein is formed around the contact surface between the separator and the first cup. The seal materials, such as O-ring, is set in the groove, while keeping its elasticity between the separator and the first cup. Also, an engaging portion is provided between the separator and the holder and also the seal materials, such as a sheet packing, or sealant is disposed therebetween so as to contact with both of them.

The provision of the seal materials or the sealant can further effectively prevent the moisture, such as damp, and air from coming into the first cup from the outside of the gas generator through the path communicating therebetween.

In addition, when the separator is disposed in the gas generator of low moisture permeability, the igniter itself comprising the second cup or the plug of the second cup can also completely shut off the inflow moisture from the gas generating agent.

Further, in the gas generator of the present invention, it is preferable that the separator is held on the holder, together with the plug of the second cup, by crimping. In this case, the separator and/or the holder are preferably made of metal.

The gas generator having the construction wherein the separator is held on the holder, together with the plug of the second cup, by crimping can provide the result that changes in design and in assembling process that are caused by the provision of the separator can be lessened, as compared with the conventional gas generator comprising no separator.

Further, in the case where the holder is made of metal and is an airtight holder itself and also the first cup and the separator are fixed to the holder in different places by crimping and the like, it is preferable that the sheet packing or sealant is provided between the separator and the holder as well as between the first cup and the holder. This can prevent the moisture, such as damp, and air from coming into the first cup from the outside of the gas generator through the pass communicating therebetween further effectively.

No particular limitation is imposed on the seal materials, as long as they are commonly used as the seal materials. Preferably, the materials of hard water permeable or low moisture permeability, such as nitrile rubber, silicon rubber, and ethylene propylene rubber, may be used. The adhesives, such as epoxy resin, may alternatively be applied. Also, as long as the seal materials have the form to closely contact with the contact surface and close up the gap, any form may be used, including an O-ring form and a sheet form.

In the gas generator of the present invention, the holder and the plug of the second cup may be integrally formed. As a result of this construction, the gap between the holder and the plug of the second cup, in other words, the moisture or air inflow path therebetween goes out of existence. As a result of this, the number of paths communicating from the outside of the gas generator into the first cup is reduced and, therefore, the moisture, such as damp, and air coming into the first cup can be shut off further effectively.

Further, in the present invention, the separator is provided with a score, which is one characteristic feature of the invention. As a result of this construction, the score of the separator, after broken by the high temperature and high pressure gas and particles caused by the ignition of the igniter, can allow the high temperature and high pressure gas and particles to be concentrated to only the direction toward the gas generating agents. Thus, the score provided in the separator is preferable oriented toward the gas generating agents. The provision of the score can also provide the advantage that when the separator is fractured by the igniter, the fractions can be prevented from flying in all directions.

The gas generator of the present invention that is capable of keeping the moisture proof as mentioned above is suitable for use with the gas generating agent comprising nitrogen-containing organic compound as fuel component.

The gas generating agents that may be used for the gas generator of the present invention include gas generating agent comprising nitrogen-containing organic compound as fuel component, inorganic compound as oxidizing agent component and at least one additive. The gas generating agent having the composition mentioned above could become a gas generating agent having the burning characteristics suitable for the seatbelt pretensioner.

Accordingly, the gas generator of the present invention is suitable for the gas generator for seatbelt pretensioner.

Preferably, the gas generating agent comprises molybdenum trioxide which is an autoignition catalyst as an additive. As a result of the gas generating agent containing molybdenum trioxide, the gas generating agent has an automatic ignition capability. The terminology "automatic ignition capability" used here means the gas generating agent in the gas generator having the property of being ignited and burnt within one minute at a temperature of 200°C.

### Brief Description of the Drawings

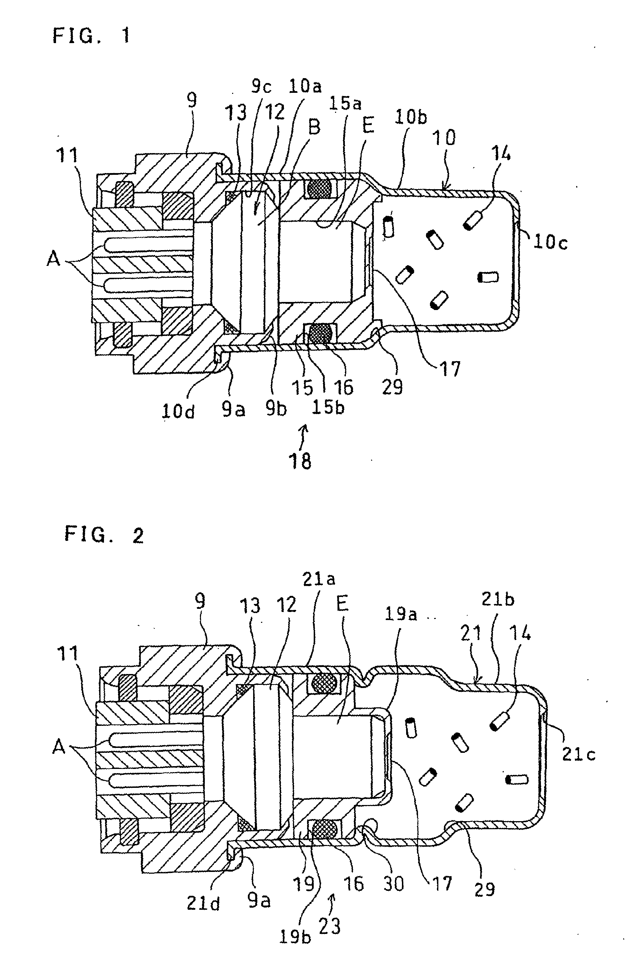

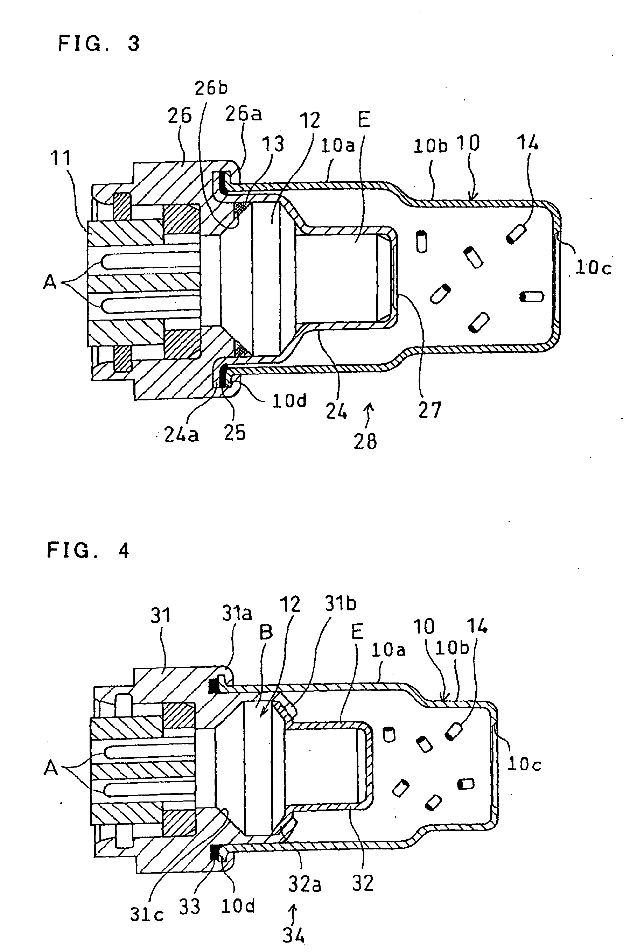

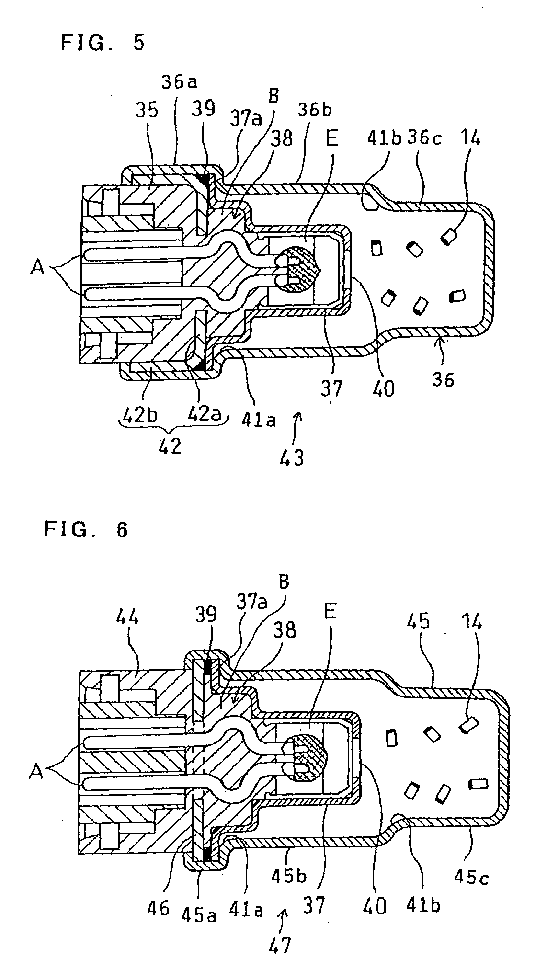

FIG. 1 is a schematic sectional view of the first embodiment of gas generator according to the present invention; FIG. 2 is a schematic sectional view of the second embodiment of gas generator according to the present invention; FIG. 3 is a schematic sectional view of the third embodiment of gas generator according to the present invention; FIG. 4 is a schematic sectional view of the fourth embodiment of gas generator according to the present invention; FIG. 5 is a schematic sectional view of the fifth embodiment of gas generator according to the present invention; FIG. 6 is a schematic sectional view of the sixth embodiment of gas generator according to the present invention; FIG. 7 is a schematic sectional view of the seventh embodiment of gas generator according to the present invention; FIG. 8 is a schematic sectional view of an igniter of the gas generator; FIG. 9 is a schematic sectional view of one example of a general type of gas generator; and FIG. 10 is a table showing the test results.

### Best Mode for Carrying out the Invention

In the following, certain preferred embodiments of the present invention will be described with reference to FIGS. 1 through 7.

### (First Embodiment)

First, the first embodiment of the present invention will be described below. A gas generator 18 shown in FIG. 1 is designed for actuating a seatbelt pretensioner of an automobile. The gas generator 18 burns gas generating agents 14 by ignition of an igniter 12 to thereby generate an adequate quantity of gas rapidly. As a result of this, the seatbelt pretensioner, not shown, is actuated.

In FIG. 1, the gas generator 18 comprises a first cup 10, the gas generating agents 14, the igniter 12, a holder 9 and a separator 15.

The first cup 10 is packed with the gas generating agents 14 in the condition that the gas generating agents are in direct contact with an inside surface around the first cup without mediation of a filter and/or a coolant.

The first cup 10 has a large diameter cylindrical portion 10a and a small diameter cylindrical portion 10b and has substantially a bottomed cylindrical form that is increased in diameter in a single stage from the bottom. The first cup 10 has a step 29 formed around the inside surface at the joining portion of the large diameter cylindrical portion and the small diameter cylindrical portion. Also, the first cup 10 has a plurality of linear notches 10c in the bottom.

When the gas generating agents 14 contained in the first `cup 10 are burnt, the notches 10c are broken, so that the gas is discharged directly to a seatbelt pretensioner, not shown. The first cup 10 has a radially outwardly extended, flanged portion 10d formed at an opening end thereof and the flanged portion 10d is fixed to the holder 9 by crimping. Materials of the first cup 10 that may be used include metals such as stainless steel and aluminum.

The igniter 12 includes, as shown in FIG. 8, ignition agent D, a second cup E for the ignition agent D to be packed therein, two vertically projected pins A for passing electric power through them to ignite the ignition agent D, and a plug B.

A shorting clip 11 for shorting the two pins A is attached to the igniter 12, as shown in FIG. 1. The shorting clip 11 serves to prevent an improper operation caused by static electricity.

In FIG. 1, the holder 9 is formed of metal such as stainless steel and aluminum or resin. The holder 9 has a first hole 9c for the plug B of the igniter 12 to be inserted and fitted therein, a projection 9b for crimping the plug B of the igniter 12, and a projection 9a for crimping the first cup 10. The holder 9 fixes the position of the first cup 10 so that the igniter 12 can be positioned in the center of the first cup 10 and also holds the plug B of the igniter 12. An O-ring 13 is disposed in a gap between the igniter 12 and the holder 9.

The separator 15 covers the second cup of the igniter 12, with its outside surface contacting with the inside surface of the first cup 10. The separator 15 in the first cup 10 is positioned by the step 29 formed in the inside of the cylindrical portion of the first cup 10. The materials of the separator 15 that may be used include metals, such as iron, aluminum and stainless steel, and resins, such as PBT and fluorocarbon resin. The separator 15 is substantially in the form of a short-length cylindrical member. The separator 15 has a score 17 and a second hole 15a. The separator 15 serves as a plug of the first cup packed with the gas generating agents and shields the igniter and the gas generating agents from each other within the first cup.

The score 17 is provided at the gas generating agents 14 side, in order to concentrate the energy of the igniter 12 to the gas generating agents 14. Preferably, the score 17 is arranged to such an extent as not to pierce the separator 15, though it may be arranged in such a manner that after the score 17 pierces the separator 15, the separator 15 thus pierced is closed by e.g. aluminum foil.

The second hole 15a is a hole for the second cup E of the igniter 12 to be inserted and fitted therein. Preferably, the second hole 15a has an inside surface corresponding in form to an outside surface of the second cup E of the igniter 12 so that the second cup E of the igniter 12 and the separator 15 can be substantially closely contacted with each other. The gap between the second cup E and the separator 15 is preferably 1mm or less, or further preferably, 0.2mm or less. When the gap therebetween is within this range, no problem is presented.

Preferably, the contact surface of the separator 15 and the contact surface of the first cup 10 are brought into close contact with each other. Even if the contact surfaces are not closely contacted with each other, the moisture inflowing path can be limited to the single gap between the first cup 10 and the separator 15. In contrast to this, there are, in general, provided two moisture inflow paths, i.e., the gap between the first cup 102 and the holder 101 and the gap between the igniter 102 and the holder 101 (See FIG. 9).

Further, the separator 15 may have seal materials, such as an O-ring 16, on its surface contacting with the first cup 10 of the separator 15, to further ensure the moisture-proof property.

The O-ring 16 of the seal materials is set in a groove 15b circularly formed around the outside surface of the separator 15 contacting with inside surface of the first cup 10. The O-ring 16 is set between the separator 15 and the first cup 10, while keeping its elasticity, and forming a part of the separator 15.

As a result of this structure, the moisture coming into the gas generating agents is guided into a singly limited path in the contact surface between the separator 15 and the first cup 10. In addition to this, the O-ring 16 for sealing the gap between the separator 15 and the first cup 10 is set in that path. Also, since the separator 15 is placed in such a manner as to cover the second cup E of the igniter 12 and also the score 17 is machined in the direction of the gas generating agents 14, the energy of the igniter 12 is concentrated to the direction of the gas generating agents 14. Additionally, since the second cup E of the igniter 12 is covered with the separator 15, the strength is enhanced.

Consequently, when the ignition agent in the interior of the igniter 12 is ignited and burnt, the second cup E is prevented from being broken before the internal pressure of the igniter 12 rises up to high pressure, so that the ignition agent is burnt under high pressure. As a result of this, the burning velocity is increased, as compared with the prior art, and the ignition time delay of the gas generator 18 is reduced.

The gas generator 18 thus constructed can be produced in the following order. A prescribed amount of gas generating agent 14 is packed in the first cup 10 having the step 29. The O-ring 16 is set in the groove 15b formed in the separator 15. The separator 15 is inserted in the first cup 10 packed with the gas generating agents 14 deep to the step 29 and is fitted therein. The first cup 10 packed with the gas generating agents 14 is produced in this order.

As the moisture-proof against the gas generating agents 14 is secured in this state, the first cup 10 may be separately produced and stored as a component for producing the gas generator just as it is. Further, no strict moisture regulation of manufactory is required in the producing processes subsequent to the process of inserting the separator 15 in the first cup 10. As a result of this, manufacturing costs can be reduced.

Then, after the igniter 12 is inserted in the holder 9, the projection 9b of the holder 9 is crimped toward the igniter 12, to fix the igniter 12 to the holder 9. At this stage, the O-ring 13 is set between the holder 9 and the igniter 12, while keeping its elasticity.

Then, the holder 9 to which the igniter 12 is fixed is fitted in the first cup 10 in which the gas generating agents 14 are contained. The projection 9a of the holder 9 is bent over the flanged portion 10d formed at an opening end of the first cup 10 and is crimped, whereby the first cup 10 and the holder 9 are integrally combined with each other.

Then, operation of the gas generator 18 will be described. When a collision sensor, not show, detects a car collision, the vertically projecting pins A in the igniter 12 shown in FIG. 8 are electrically energized. Then, the bridge wire F in the igniter 12 generates heat to ignite the ignitable agent C. Sequentially, as a result of the ignition of the ignitable agent C, the ignition agent D is ignited and burnt. Although along with the burning of the ignition agent D, the interior of the igniter 12 increases in temperature and pressure, since the second cup E of the igniter 12 is covered with the separator 15 and thus is reinforced, as shown in Fig.1 the igniter 12 is prevented from being expanded and broken until the ignition agent D is fully burnt.

As the pressure rises up, the burning velocity of the explosives used for the ignition agent D increases. Accordingly, the igniter 12 is eventually broken earlier, as compared with the igniter that is not covered with the separator 15. After the burning proceeds further, the gas and particles fully increased in temperature and pressure are released toward the separator 15. At this time, the released gas and particles fracture the score 17 of the separator 15. Then, passing through the fractured score, the high temperature and high pressure gas and particles are sprayed at a burst onto the gas generating agents 14 packed in the first cup 10. Then, the gas generating agents 14 are ignited. The separator 15 is held by the step 29, so that it is prevented from being blown out toward the gas generating agents 14.

Sequentially, a large amount of gas generated in the first cup 10 by the burning of the gas generating agents 14 causes the interior pressure of the first cup 10 to rise up rapidly and then causes the notches 10c provided in the bottom of the first cup 10 to be fractured. Then, the large amount of gas is introduced into the seatbelt pretensioner, not shown, to actuate the seatbelt pretensioner.

### (Second Embodiment)

Next, the second embodiment of the gas generator of the present invention will be described. It is to be noted that the members in FIG. 2 identical in function to those in FIG. 1 are given like reference characters, to avoid redundancy of explanation.

The gas generator 23 shown in FIG. 2 has a first cup 21 having an inwardly projecting protrusion 30 in an inside surface thereof.

The first cup 21 has a large diameter cylindrical portion 21a and a small diameter cylindrical portion 21b and has substantially a bottomed cylindrical form that is increased in diameter in a single stage from the bottom. The first cup has the step 29 formed around the inside surface in the boundary between the large diameter cylindrical portion and the small diameter cylindrical portion. Also, the first cup 21 has a plurality of linear notches 21c in the bottom. When the gas generating agents 14 contained in the first cup 21 are burnt, the notches 21c are broken, so that the gas is discharged directly to the seatbelt pretensioner, not shown. The first cup 21 has a radially outwardly extended, flanged portion 21d formed at an opening end thereof, and the flanged portion 21d is fixed to the holder 9 by crimping. Materials of the first cup 21 that may be used include metals such as stainless steel and aluminum.

The inwardly projecting protrusion 30 formed around the inside surface of the first cup 21 is out of position toward the opening end of the first cup 21, as compared with the step 29 of the gas generator 18 shown in FIG. 1. The other side of the protrusion 30 is a recessed portion, when viewed from the outside surface of the first cup 21.

The protrusion 30 is additionally provided for allowing the separator 19 to be positioned when the step 29 must be provided in a limited place from the mounting relation with respect to the seatbelt pretensioner.

This can allow the separator 19 to be positioned while keeping the volume of the interior of the first cup 21 larger than that of the first cup 21 shown in FIG. 1.

The protrusion 30 is provided around the inside surface of the first cup 21 at a location corresponding to around a central portion with respect to height of the second cup E of the igniter 12.

The separator 19 to be positioned by the protrusion 30 is formed to protrude toward the gas generating agents 14, so that its axial part 19a covers the second cup E of the igniter 12 with it. A part of the outside surface of the separator 19, specifically at the opening side, is set to have a diameter to contact with the inside surface of the large diameter cylindrical portion 21a of the first cup. The separator serves as the plug of the first cup packed with the gas generating agents and shields the igniter and the gas generating agents from each other within the first cup.

Although the gas generator 23, in which the protrusion 30 is provided in advance in the first cup 21 before the separator 19 is fitted in the first cup 21, has been illustrated above, modification may be made such that after the separator 19 is fitted in the first cup 21, the first cup 21 is crimped from outside to form the recessed portion in the outside surface, whereby the protrusion 30 is formed around the inside surface to fix the separator 19 in the first cup. Alternatively, the corresponding portion of the first cup 21 may be crimped from outside so that the protrusion 30 may be formed toward the O-ring groove 19b of the separator 19 in which the O-ring 16 is set.

### (Third Embodiment)

Next, the third embodiment of the gas generator of the present invention will be described. It is to be noted that the members in FIG. 3 identical in function to those in FIG. 1 are given like reference characters, to avoid redundancy of explanation.

The gas generator 28 shown in FIG. 3 has a cup-shaped separator 24. The cup-shaped separator 24 is mounted on the holder 26, together with the first cup 10, by crimping.

The holder 26 has a crimping projection 26a for mounting both of the first cup 10 and the separator 24 on the holder 26.

The separator 24 is formed in a cup-like shape to cover the igniter 12 with it and is mounted on the holder 26. A part of the outside surface of the separator 24, specifically at the opening side, is set to have a diameter to contact with the inside surface of the large diameter cylindrical portion 10a of the first cup or slightly smaller than that. The separator serves as the plug of the first cup packed with the gas generating agents and shields the igniter and the gas generating agents from each other within the first cup.

The separator 24 has a radially outwardly extended, flanged portion 24a formed at an opening end thereof, so that the separator 24 and the first cup 10 can both be mounted on the holder 26.

The flanged portion 24a and the flanged portion 10b of the first cup 10 packed with the gas generating agents 14 are both mounted on the holder 26. The mounting portion is crimped by weighing down the crimping projection 26a of the holder 26 onto the flanged portion 10d of the first cup 10. A seat packing 25 of seal materials is set between the flanged portion 10d of the first cup 10 and the flanged portion 24a of the separator 24, while keeping its elasticity. The score 27 is provided at the gas generating agents 14 side of the separator 24.

The igniter 12 is fitted in the first hole 26b of the holder 26 by the separator 24, instead of being mounted directly on the holder 26 by crimping. The O-ring 13 is set between the holder 26 and the igniter 12, while keeping its elasticity.

### (Fourth Embodiment)

Next, the fourth embodiment of the gas generator of the present invention will be described. It is to be noted that the members in FIG. 4 identical in function to those in FIG. 1 are given like reference characters, to avoid redundancy of explanation.

The gas generator 34 shown in FIG. 4 has a cup-shaped separator 32. The separator 32 is mounted on the holder 31 by crimping.

The holder 31 has a crimping projection 31a for mounting the first cup 10 thereon and a crimping projection 31b for mounting the separator 32 and the plug B thereon.

The separator 32 is formed in a cup-like shape to cover the second cup E of the igniter 12 and a front end of the plug B of the igniter 12 with it. The separator has, at an opening end thereof, a flanged portion 32a formed to obliquely extending radially outwardly along the front end of the plug B so that it can be mounted on the holder 31 by crimping. The flanged portion 32a is mounted on the holder 31, together with the plug B of the igniter 12, by the projection 31b of the holder 31 crimped by folding the projection 31b over the flanged portion 32a of the separator 32. Sealing material, not shown, is applied to the gap between a contact surface of the holder 31 and a contact surface of the separator 32.

Then, the holder 31 mounting the igniter 12 and the separator 32 thereon is inserted in the first cup 10 packed with the gas generating agents 14, to be fitted therein. Then, the first cup 10 is mounted on the holder 31 by the projection 31a of the holder 31 crimped by folding the projection 31a over the flanged portion 10d of the first cup 10.

An O-ring 33 of seal materials is set between the contact surface of the holder 31 and the contact surface of the first cup 10, while keeping its elasticity.

The igniter 12 is fitted in the first hole 31c of the holder 31 by the separator 32, instead of being mounted directly on the holder 31 by crimping. A sheet packing may be fitted in the gap, instead of application of the sealant to the gap between the holder 31 and the separator 32.

The moisture trying to come into the first cup 10 along the igniter 12 is blocked out by the holder 31 and the separator 32. For providing further improved blockage of the moisture, it is preferable from the viewpoints of strength and moisture permeability that the holder 31 is formed of metals of strong and low moisture permeability, such as stainless steel and aluminum. Likewise, from the viewpoints of strength and moisture permeability, it is preferable that the separator 32 is also formed of metals of strong and low moisture permeability, such as stainless steel and aluminum.

### (Fifth Embodiment)

Next, the fifth embodiment of the gas generator of the present invention will be described. It is to be noted that the members in FIG. 5 identical in function to those in FIG. 1 are given like reference characters, to avoid redundancy of explanation.

The gas generator 43 of FIG. 5 has the structure that the holder 35 and the plug B of the igniter 38 are integrally formed of resin.

The first cup 36 has a large diameter cylindrical portion 36a, an intermediate diameter cylindrical portion 36b and a small diameter cylindrical portion 36c and has substantially a bottomed cylindrical form that is increased in diameter in two stages from the bottom. The first cup has two steps 41a, 41b which are formed around the inside surfaces in the boundaries between the large diameter cylindrical portion and the intermediate diameter cylindrical portion and between the intermediate diameter cylindrical portion and the small diameter cylindrical portion, respectively.

The separator 37 is formed in a cup-like shape to cover the igniter 38 with it and is mounted on the holder 35. A part of the outside surface of the separator 37, specifically at the opening side, is set to have a diameter to contact with the inside surface of the intermediate diameter cylindrical portion 36b of the first cup or slightly smaller than that. The separator serves as the plug of the first cup packed with the gas generating agents and shields the igniter and the gas generating agents from each other within the first cup. The separator 37 has, at an opening end thereof, a flanged portion 37a formed to project to an inside surface of the large diameter cylindrical portion 36a of the first cup. The separator 37 is set in position in the first cup 36 by the flanged portion 37a being abutted with the step 41a at the opening side of the first cup 36.

The holder 35 includes an integrally formed metal insert 42. The insert 42 comprises a cylindrical member 42b and a ring-shaped plate 42a continuously extending from one end of the cylindrical member 42b and forms a flange projecting from the holder 35.

The flanged portion 37a of the separator 37 is brought into abutment with the step 41a of the first cup 36, first, and, then, the ring-shaped plate 42a of the metal insert 42 is brought into abutment with the flanged portion 37a through the O-ring 39. In this state, the opening end of the first cup 36 is folded over the other end of the cylindrical member 42b of the metal insert 42 and is crimped so that the flanged portion 37a of the separator 37, the metal insert 42, and the first cup 36 can be integrally combined with each other.

At this time, the step 41a of the first cup 36 and the flanged portion 37a of the separator 37 are pressed toward the metal insert 42, so that the O-ring 39 is deformed to close up the gaps therebetween. The separator 37 has the score 40 formed at a portion thereof on the gas generating agents 14 side.

### (Sixth Embodiment)

Next, the sixth embodiment of the gas generator of the present invention will be described. The gas generator 47 of FIG. 6 has the structure that the holder 44 and the plug B of the igniter 38 are integrally formed of resin. It is to be noted that the members in FIG. 6 identical in function to those in FIG. 1 are given like reference characters, to avoid redundancy of explanation.

The first cup 45 has a large diameter cylindrical portion 45a, an intermediate diameter cylindrical portion 45b and a small diameter cylindrical portion 45c and has a bottomed cylindrical form that is increased in diameter in two stages from the bottom. The first cup has two steps 41a, 41b which are formed around the inside surfaces in the boundaries between the large diameter cylindrical portion and the intermediate diameter cylindrical portion and between the intermediate diameter cylindrical portion and the small diameter cylindrical portion, respectively.

The separator 37 is formed in a cup-like shape to cover the igniter 38 with it and is mounted on the holder 44. A part of the outside surface of the separator 37, specifically at the opening side, is set to have a diameter to contact with the inside surface of the intermediate diameter cylindrical portion 45b of the first cup or slightly smaller than that. The separator serves as the plug of the first cup packed with the gas generating agents and shields the igniter and the gas generating agents from each other within the first cup. The separator 37 has, at an opening end thereof, the flanged portion 37a formed to project to an inside surface of the large diameter cylindrical portion 45a of the first cup. The separator 37 is set in position in the first cup 45 by the flanged portion 37a being abutted with the step 41a at the opening side of the first cup 45.

The holder 44 includes an integrally formed metal insert 46. The insert 46 comprises a ring-shaped plate and forms a flange projecting from the holder 44. The flanged portion 37a of the separator 37 is brought into abutment with the step 41a of the first cup 45, first, and, then, one side of the metal insert 42 is brought into abutment with the flanged portion 37a through the O-ring 39. In this state, the opening end of the first cup 45 is folded over the other side of the metal insert 42 and is crimped so that the flanged portion 37a of the separator 37, the metal insert 42, and the first cup 45 can be integrally combined with each other.

At this time, the step 41a of the first cup 45 and the flanged portion 37a of the separator 37 are pressed toward the metal insert 42, so that the O-ring 39 is deformed to close up the gaps therebetween. The separator 37 has the score 40 formed at a portion thereof on the gas generating agents 14 side.

### (Seventh Embodiment)

Next, the seventh embodiment of the gas generator of the present invention will be described. It is to be noted that the members in FIG. 7 identical in function to those in FIG. 1 are given like reference characters, to avoid redundancy of explanation.

The gas generator 49 of FIG. 7 has the structure that the holder 48 and the plug B of the igniter 38 are integrally formed of resin.

The first cup 36 has a large diameter cylindrical portion 36a, an intermediate diameter cylindrical portion 36b and a small diameter cylindrical portion 36c and has a bottomed cylindrical form that is increased in diameter in two stages from the bottom. The first cup has two steps 41a, 41b which are formed around the inside surfaces in the boundaries between the large diameter cylindrical portion and the intermediate diameter cylindrical portion and between the intermediate diameter cylindrical portion and the small diameter cylindrical portion, respectively.

The separator 37 is formed in a cup-like shape to cover the igniter 38 with it and is mounted on the holder 48. A part of the outside surface of the separator 37, specifically at the opening side, is set to have a diameter to contact with the inside surface of the intermediate diameter cylindrical portion 36b of the first cup or slightly smaller than that. The separator serves as the plug of the first cup packed with the gas generating agents and shields the igniter and the gas generating agents from each other within the first cup. The separator 37 has, at an opening end thereof, the flanged portion 37a formed to project to an inside surface of the large diameter cylindrical portion 36a of the first cup. The separator 37 is set in position in the first cup 36 by the flanged portion 37a being abutted with the step 41a at the opening side of the first cup 36.

The holder 48 includes an integrally combined metal insert 42. The insert 42 comprises a cylindrical member and forms a flange projecting from the holder 48.

The flanged portion 37a of the separator 37 is brought into abutment with the step 41a of the first cup 36, first, and, then, one end of the metal insert 42 is brought into abutment with the flanged portion 37a through the O-ring 39. In this state, the opening end of the first cup 36 is folded over the other end of the metal insert 42 and is crimped so that the flanged portion 37a of the separator 37, the metal insert 42, and the first cup 36 can be integrally combined with each other.

At this time, the step 41a of the first cup 36 and the flanged portion 37a of the separator 37 are pressed toward the metal insert 42, so that the O-ring 39 is deformed to close up the gaps therebetween. The separator 37 has the score 40 formed at a portion thereof on the gas generating agents 14 side.

### (Preferable Gas Generating Agent)

Gas generating agent comprising nitrogen-containing organic compound as fuel component, inorganic compound as oxidizing agent component and at least one additive is preferable as the gas generating agent used with the gas generator of the present invention.

The fuel components that may be used include at least one material selected from the group consisting of aminotetrazole, guanidine nitrate, and nitroguanidine. The oxidizing agent components that may be used include at least one material selected from the group consisting of strontium nitrate, ammonium nitrate, potassium nitrate, ammonium perchlorate, and potassium perchlorate.

The additives that may be used include molybdenum trioxide which is an autoignition catalyst.

Binder and equivalent can be cited as the other additive to be added to the gas generating agent. The binders that may be used include at least one material selected from the group consisting of cyamoposis gum, methyl cellulose, carboxymethyl cellulose, water-soluble cellulose ether and polyethylene glycol.

The gas generating agent comprises 5-aminotetrazole and guanidine nitrate used as the fuel component; strontium nitrate and ammonium perchlorate used as the oxidizing agent component; molybdenum trioxide used as the autoignition catalyst; and cyamoposis gum used as the binder. Further preferably, the gas generating agent comprises 10-30 mass percent of 5-aminotetrazole and 15-35 mass percent of guanidine nitrate used as the fuel component; 10-30 mass percent of strontium nitrate and 15-35 mass percent of ammonium perchlorate used as the oxidizing agent component; 1-10 mass percent of molybdenum trioxide used as the autoignition catalyst; and 1-10 mass percent of cyamoposis gum used as the binder.

### (Manufacturing Method of Gas Generating Agent)

The manufacturing method of these gas generating agents will be described. A prescribed amount of each of the components of the gas generating agent is measured. After the measurement, the components are fully stirred with a V-type stirring machine. 10-30 mass percent of water is added to the mixture and stirred further. The wet mixture is kneaded with a kneader to produce a viscous clot. This viscous clot is molded into a desired form with a vacuum extruding machine. The extruded products are dried at 60°C for 15 hours and then at 100°C for 5 hours to produce desired gas generating agents.

### (Examples)

In the following, further detailed description of the present invention will be made with reference to Examples below. It is to be noted that in the following examples and comparative examples, the same igniter, gas generating agents and O-ring were used.

### (Example 1)

The gas generator as shown in FIG. 1 was produced. First, the igniter was fixed to the aluminum holder through the O-ring. Then, 0.9g of gas generating agent, which comprises 19.0 mass percent of 5-aminotetrazole, 26.0 mass percent of guanidine nitrate, 22.0 mass percent of strontium nitrate, 26.0 mass percent of ammonium perchlorate, 4.0 mass percent of molybdenum trioxide, and 3.0 mass percent of cyamoposis gum, was measured and then was packed in the first aluminum cup. The gas generating agents molded into a single-hole cylindrical form each having an outer diameter of ϕ 1.5mm, an inner diameter of ϕ 0.5mm, a height of 1.5mm and a weight of 3mg were used. Then, the separator, in which the O-ring was fitted in the groove circularly formed around the outside surface of a generally cylinder aluminum body, was inserted in the first cup packed with the gas generating agents, so as to contact with the inside surface of the first cup. Then, the separator was set in position by the step of the first cup. Finally, the holder in which the igniter was fixed was inserted in the first cup and was fixed thereto by crimping.

The moisture absorption test was conducted by measuring a quantity of moisture absorption of the gas generating agent after the gas generator was kept at a temperature of 80°C and a humidity of 95% and for 1,000 hours.

The measurement of the ignition time delay was made. The start time of conducting electricity of electric power to the gas generator was set at 0 and the time required for the pressure to rise in a tank of an internal volume of 18cc was measured as the ignition time delay.

### (Example 2)

The gas generator as shown in FIG. 2 was produced. First, the igniter was fixed to the aluminum holder through the O-ring. Then, 0.9g of gas generating agent, identical with that used in Example 1, was measured and then was packed in the first aluminum cup. Then, the separator, in which the O-ring was fitted in the groove circularly formed around the outside surface of the generally cylinder aluminum body, was inserted in the first cup packed with the gas generating agents, so as to contact with the inside surface of the first cup. Then, the separator was set in position by the protrusion formed around the inside surface of the first cup. Finally, the holder in which the igniter was fixed was inserted in the first cup and was fixed thereto by crimping.

### (Example 3)

The gas generator as shown in FIG. 3 was produced. First, 0.9g of gas generating agent, identical with that used in Example 1, was measured and then was packed in the first aluminum cup. Then, the sheet packing was fitted to the aluminum holder and then that holder was inserted in the cup packed with the gas generating agents. Then, the igniter was inserted in the separator and the O-ring was fitted to the separator. Finally, the aluminum holder was inserted in the separator and was fixed thereto by crimping. At this time, the separator was set in position by the crimping portions of the first cup and holder.

### (Example 4)

The gas generator as shown in FIG. 4 was produced. First, the igniter was inserted in the separator. Then, after the sealant was applied to the crimping portions of the separator and holder, the separator and holder were crimped, together with the igniter, so that the separator and the igniter are fixed to the holder. Then, 0.9g of gas generating agent, identical with that used in Example 1, was measured and then was packed in the first aluminum cup. Finally, the aluminum holder was inserted in the first cup packed with the gas generating agents, with the O-ring interposed therebetween, and was fixed to the first cup by crimping.

### (Comparative Example 1)

The gas generator as shown in FIG. 9 was produced. First, the igniter was fixed to the aluminum holder, with the O-ring interposed therebetween. Then, 0.9g of gas generating agent, identical with that used in Example 1, was measured and then was packed in the first aluminum cup. Finally, after the holder to which the igniter was fixed was inserted in the first cup and the sealant was applied to the crimping portions of the first cup and holder, the first cup was fixed to the holder by crimping.

The results of the moisture-absorption test and measurement of the ignition time delay of Examples 1 to 4 and Comparative Example 1 mentioned above are shown in Table 1 in FIG. 10.

Moisture absorption quantity of gas generating agent was calculated according to the equation given below.

Moisture absorption quantity of gas generating agent = (mass of gas generating agent after moisture absorption test ― mass of gas generating agent before moisture absorption test) ÷ mass of gas generating agent before moisture absorption test × 100

It is seen from Table 1 that in Examples 1 to 4, the moisture absorption quantity of gas generating agent after moisture absorption test is reduced to 0.3 percent by mass or less and no performance decrement of the gas generator of Examples is caused. In contrast, in Comparative Example 1, 1.5 mass percent of moisture absorption quantity is found and the burning velocity of the gas generating agent is reduced so that the gas generator cannot exhibit its full performance.

Also, in Examples 1 to 4, the ignition time delay as short as less than 2ms is achieved. In contrast, in Comparative Example 1, the ignition time delay is as long as 2.2ms so that the gas generator delays in actuation and the gas generator cannot exhibit its full performance.

### Capability of Exploitation in Industry

The gas generator of the present invention is optimum for the gas generator that is less subject to atmospheric moisture, operates without time delay, and exhibits its full performance for a seatbelt pretensioner and the like system.

## Claims

1. A gas generator comprising a first cup packed with gas generating agent that generates gas by burning; a second cup disposed in an inside of the first cup and containing ignition agent; and a holder holding the first cup and a plug for the second cup or holding the first cup and the second cup
wherein there is provided a separator which allows the gas generating agent to be confined within the first cup so as to shield the gas generating agent from the second cup.

2. The gas generator according to Claim 1, wherein the separator is disposed so as to cover the second cup.

3. The gas generator according to Claim 1 or 2, wherein the separator is disposed so that at least a part of an outside surface of the separator can be contacted with an inside surface of the first cup.

4. The gas generator according to Claim 1 or 2, wherein the separator is set in position within the first cup by a protrusion or a step provided in the inside surface of the first cup.

5. The gas generator according to Claim 1 or 2, wherein the separator is held onto the holder by crimping.

6. The gas generator according to Claim 1 or 2, wherein seal materials for sealing a gap between the separator and the first cup is disposed therebetween.

7. The gas generator according to Claim 1 or 2, wherein the separator is held on the holder, together with the plug of the second cup, by crimping.

8. The gas generator according to Claim 1 or 2, wherein seal materials for sealing a gap between the separator and the holder is disposed therebetween.

9. The gas generator according to Claim 1 or 2, wherein
the holder is made of metal, and
seal materials for sealing a gap between the separator and the holder and a gap between the first cup and the holder are respectively disposed.

10. The gas generator according to Claim 1 or 2, wherein the holder and the plug are integrally formed.

11. The gas generator according to Claim 1 or 2, wherein the separator has a score on itself.

12. The gas generator according to Claim 1 or 2, wherein the gas generating agent comprises nitrogen-containing organic compound as fuel component, inorganic compound as oxidizing agent component and at least one additive.

13. The gas generator according to Claim 12, wherein the gas generating agent comprises at least one material selected from the group consisting of 5-aminotetrazole, guanidine nitrate and nitroguanidine as the fuel component; and at least one material selected from the group consisting of strontium nitrate, ammonium nitrate, potassium nitrate, ammonium perchlorate and potassium perchlorate as the oxidizing agent component

14. The gas generator according to Claim 12, wherein the gas generating agent comprises molybdenum trioxide as the additive.

15. The gas generator according to Claim 12, wherein the additive of the gas generating agent comprises at least one material selected from the group consisting of cyamoposis gum, methyl cellulose, carboxymethyl cellulose, water-soluble cellulose ether and polyethylene glycol.

16. The gas generator according to Claim 12, wherein the gas generating agent comprises 5-aminotetrazole and guanidine nitrate as the fuel component; strontium nitrate and ammonium perchlorate as the oxidizing agent component; molybdenum trioxide and cyamoposis gum as the additive.

17. The gas generator according to Claim 12, wherein the gas generating agent comprises 10-30 mass percent of 5-aminotetrazole and 15-35 mass percent of guanidine nitrate as the fuel component; 10-30 mass percent of strontium nitrate and 15-35 mass percent of ammonium perchlorate as the oxidizing agent component; and 1-10 mass percent of molybdenum trioxide and 1-10 mass percent of cyamoposis gum as the additive.

18. The gas generator according to Claim 1 or 2, which is used for a seatbelt pretensioner.
